# EUROPEAN PATENT APPLICATION

(11) **EP 4 459 708 A1**
(43) Date of publication of application: **06.11.2024**
(21) Application number: 22916053.6
(22) Date of filing: 26.12.2022
(51) Int. Cl.: H01M 4/36, H01M 4/139, H01M 4/505, H01M 4/525, H01M 4/62

(54) **COMPOSITE ACTIVE MATERIAL**

(30) Priority: 27.12.2021 JP 2021212238
(71) Applicant: Mitsui Mining & Smelting Co., Ltd., Shinagawa-ku Tokyo 141-8584 (JP)
(72) Inventor: NAKAYAMA, Yuki, Ageo-shi, Saitama 362-0021 (JP); ITO, Takahiro, Ageo-shi, Saitama 362-0021 (JP); MIYASHITA, Norihiko, Ageo-shi, Saitama 362-0021 (JP); IKEDA, Takeshi, Ageo-shi, Saitama 362-0021 (JP); TAJIMA, Taketoshi, Ageo-shi, Saitama 362-0021 (JP); KAWAMURA, Takeru, Ageo-shi, Saitama 362-0021 (JP)
(74) Representative: Novagraaf Technologies
(86) International application number: PCT/JP2022/048024
(87) International publication number: WO 2023/127830

(57) **Abstract**

A composite active material of the present invention has an active material and a surface portion that is disposed on the surface of the active material and that contains a sulfur-containing compound. The sulfur-containing compound contains a crystalline phase having an argyrodite-type crystal structure. It is preferable that the active material contains a lithium (Li) element and an element M, where M is at least one of a nickel (Ni) element, a cobalt (Co) element, a manganese (Mn) element, and an aluminum (Al) element. It is also preferable that the active material has a core particle and a coating portion disposed on the surface of the core particle.

## Description

### Technical Field

The present invention relates to a composite active material and an electrode material mixture, a coating composition, an electrode, and a solid-state battery including the same.

### Background Art

Solid-state batteries use a solid electrolyte as an electrolyte and are therefore safer than batteries using an electrolyte solution. For this reason, solid-state batteries are expected to be used in various applications, including electric automobiles. The applicant of the present application has previously proposed a sulfide-based compound having a crystalline phase with a cubic argyrodite-type crystal structure and represented by a composition formula: Li₇₋ₓPS₆₋ₓCl_{y}Br_{z}, where x = y + z, 1.0 < x ≤ 1.8, and the ratio of the mole ratio of Br to the mole ratio of Cl is 0.1 to 10.0, as a solid electrolyte for use in solid-state batteries (Patent Literature 1).

Also, a solid electrolyte that is a sulfur-based compound made of a glass ceramic is known (Patent Literature 2). In Patent Literature 2, it is proposed to coat the surface of an active material with a sulfur-based compound made of a glass ceramic in order to improve the battery output.

### Citation List

### Patent Literature

Patent Literature 1: US 2022/029196A1
Patent Literature 2: US 2017/250407A1

### Summary of Invention

In solid-state batteries, however, since the charge/discharge reaction proceeds via contact points between particles, interfacial resistance tends to be higher than that of batteries in which an electrolyte solution is used, and it is not easy to obtain good battery performance.

Therefore, an object of the present invention is to provide a composite active material with which good battery performance can be obtained.

The present invention provides a composite active material having an active material and a surface portion that is disposed on the surface of the active material and that contains a sulfur-containing compound,
wherein the sulfur-containing compound contains a crystalline phase having an argyrodite-type crystal structure.

### Brief Description of Drawings

[Fig. 1] Figs. 1(a) and 1(b) schematically show a composite active material of the present invention.
[Fig. 2] Fig. 2 shows the results of X-ray diffraction measurement of composite active materials obtained in Example 1 and Comparative Examples 1 and 2.
[Fig. 3] Fig. 3 shows a scanning electron microscope image of the composite active material obtained in Example 1.

### Description of Embodiments

Hereinafter, the present invention will be described by way of preferred embodiments thereof.

The present invention relates to a composite active material having an active material and a surface portion disposed on the surface of the active material. The active material and the surface portion of the composite active material of the present invention will be individually described below.

### Active Material

The active material is a part of the composite active material of the present invention that mainly contributes to an electrode reaction. In the present invention, the active material may be either a positive electrode active material or a negative electrode active material. The active material is typically in particle form, and the entire particle may be composed of a single substance or may have a core particle and a coating portion disposed on the surface of the core particle. When the active material is the latter, the composite active material of the present invention has a structure having a core particle, a coating portion disposed on the surface of the core particle, and a surface portion disposed on the surface of the coating portion.

### Core Particle

As the core particle, either a positive electrode active material or a negative electrode active material can be used. Whether the positive electrode active material is used or the negative electrode active material is used can be determined according to the specific application of the composite active material of the present invention.

When a positive electrode active material is used as the core particle, a conventionally known positive electrode active material can be used as the positive electrode active material without any particular limitation. For example, a material capable of absorbing and releasing lithium ions can be used as the positive electrode active material. Examples of such a positive electrode active material include, but are not limited to, a compound having a layered rock salt-type crystal structure, a compound having a spinel-type crystal structure, a compound having an olivine-type crystal structure, and the like.

Examples of the layered rock salt-type crystal structure include lithium-transition metal complex oxides such as lithium cobalt oxide and lithium nickel oxide.

Examples of the compound having a spinel-type crystal structure include lithium-transition metal complex oxides such as lithium manganese oxide and lithium nickel manganese oxide.

Examples of the compound having an olivine-type crystal structure include phosphates such as lithium iron phosphate.

When a negative electrode active material is used as the core particle, a conventionally known negative electrode active material can be used as the negative electrode active material without any particular limitation. For example, a carbon material such as graphite, silicon, a silicon oxide, and the like, which are materials capable of absorbing and releasing lithium ions, can be used as the negative electrode active material.

In particular, in the present invention, it is preferable to use a positive electrode active material as the core particle, because this improves the performance of a battery including the composite active material of the present invention. From this viewpoint, it is preferable that the core particle is made of, as the positive electrode active material, a lithium metal complex oxide containing a lithium (Li) element and an element M. Details of the element M are as described below.

It is preferable that the above-described lithium metal complex oxide is particles made of a lithium metal complex oxide having a layered rock salt-type crystal structure represented by a general formula (1): Li₁₊ₓM₁₋ₓO₂, because this improves the performance of a battery including the composite active material of the present invention even further.

In the general formula (1), M represents either (i) or (ii) below:
(i) one element, or a combination of or two or more elements, selected from the group consisting of Ni, Co, Mn, and Al; or
(ii) one elements, or a combination of two or more elements, including: at least one element selected from the group consisting of Ni, Co, Mn, and Al; and at least an one element selected from the group consisting of transition metal elements that are present between Group 3 elements and Group 11 elements on the periodic table and typical metal elements in Periods 2 to 4 on the periodic table.

In the general formula (1), x satisfies -0.05 ≤ x ≤ 0.09.

In the general formula (1): Li₁₊ₓM₁₋ₓO₂, "1+x" is preferably 0.95 or more and 1.09 or less, more preferably 0.97 or more and 1.07 or less, and even more preferably 0.98 or more and 1.05 or less.

It is preferable that "M" in the general formula (1) represents one element, or a combination of two or more elements, selected from the group consisting of Ni, Co, Mn, and Al, or "M" represents one element, or a combination of two or more elements, selected from the group consisting of Ni, Co, Mn, and Al as well as one element, or two or more elements, selected from the group consisting of transition metal elements that are present between Group 3 elements and Group 11 elements on the periodic table and typical metal elements in Periods 2 to 4 on the periodic table.

Examples of the transition metal elements that are present between Group 3 elements and Group 11 elements on the periodic table and the typical metal elements in Periods 2 to 4 on the periodic table include Al, P, V, Fe, Ti, Mg, Cr, Ga, Cu, Zn, Nb, Zr, Mo, W, Ta, Re, and the like.

Therefore, for example, one element, or a combination of two or more elements, selected from the group consisting of Ni, Co, Mn, and Al, or alternatively, elements including one element, or a combination of two or more elements, selected from the group consisting of Ni, Co, Mn, and Al as well as one element, or two or more elements, selected from the group consisting of P, V, Fe, Ti, Mg, Cr, Ga, Cu, Zn, Nb, Zr, Mo, W, Ta, and Re can be used as the constituent element M.

It is preferable that "M" in the general formula (1) includes three elements Mn, Co, and Ni. For example, "M" may consist only of the three elements Mn, Co, and Ni, or may include one or more of the aforementioned other elements in addition to these three elements.

When "M" in the formula (1) contains the three elements Mn, Co, and Ni, the molar content ratio between Mn, Co, and Ni is preferably Mn:Co:Ni = 0.01 to 0.45:0.01 to 0.40:0.30 to 0.95, more preferably Mn:Co:Ni = 0.05 to 0.40:0.03 to 0.40:0.30 to 0.85, and even more preferably Mn:Co:Ni = 0.05 to 0.40:0.03 to 0.40:0.30 to 0.75.

Note that, although the atomic ratio of the oxygen content in the general formula (1) is specified as "2" for the sake of convenience, the compound may be somewhat non-stoichiometric. That is to say, the atomic ratio of the oxygen content may be "2-δ". "-6" indicates oxygen deficiency, and δ is preferably 0 or more or 0.2 or less, and in particular is more preferably 0.1 or less, and even more preferably 0.05 or less.

The lithium metal complex oxide may contain impurities. The impurity content is not particularly limited as long as the active material can exhibit desired functions, but, for example, is preferably 0.20 mass% or less, and more preferably 0.17 mass% or less. When the impurity content is within this range, the lithium metal complex oxide can exhibit excellent properties as an active material.

Whether or not the lithium metal complex oxide has a layered rock salt-type crystal structure can be determined by performing fitting to a crystal structure model of a hexagonal crystal with the space group R-3m, for example, and if the ranges of Rwp and S, which indicate the degree of agreement between the observed intensity and the calculated intensity, satisfy Rwp < 10 or S < 2.5, the crystal structure of the lithium metal complex oxide can be determined as being a layered rock salt-type crystal structure.

Primary particles of the lithium metal complex oxide may be monocrystalline or polycrystalline, but are particularly preferably polycrystalline. "Monocrystalline" means that the primary particles are each composed of a single crystallite, while "polycrystalline" means that a plurality of crystallites are present within each of the primary particles. Whether or not the lithium metal complex oxide is polycrystalline can be checked by observing a primary particle cross section through electron backscatter diffraction (EBSD), for example. If the lithium metal complex oxide is polycrystalline, it can be confirmed that crystalline bodies with a plurality of orientations are present within a primary particle.

### Coating Portion

The active material constituting the composite active material of the present invention preferably has a core particle and a coating portion. As a result of the active material having the coating portion, the contact between the core particle and the surface portion can be suppressed in the composite active material. In other words, the core particle, the coating portion, and the surface portion are disposed in this order. With this configuration, it is possible to suppress problems such as the formation of a resistive layer at the interface between the core particle and the surface portion and therefore suppress problems such as the resistive layer inhibiting the transfer of lithium ions.

It is preferable that, regardless of the type of core particle, the coating portion contains a lithium (Li) element, an element A, where A is at least one of a titanium (Ti) element, a zirconium (Zr) element, a tantalum (Ta) element, a niobium (Nb) element, and an aluminum (Al) element, and an oxygen (O) element, because this improves the performance of a battery including the composite active material of the present invention. It is preferable that the element A is at least one of Ta and Nb. Furthermore, it is preferable that the element A is at least Nb, and in particular it is preferable that the element A is Nb.

When the element A is at least one element of Ta and Nb, the composition of the coating portion can be represented by LiₓAO_{y}, for example. Typically, LiAO₃, that is, a composition in which x = 1 and y = 3 can be envisaged. When the coating portion is made of an amorphous compound as described later, x and y in the formula can take any values within ranges based on the valences of the elements. In particular, it is particularly preferable that the coating portion has a composition (1 < x) in which more than 1 mole of Li is contained per mole of the element A, because this improves the performance of a battery including the composite active material of the present invention.

When the compound constituting the coating portion is represented by LiₓAO_{y}, a method for satisfying 1 < x may be to blend the raw materials such that the lithium raw material is added in such an amount relative to that of the element A raw material that the amount of Li is in excess of the amount in the stoichiometric composition ratio of a composition that is expected to be produced, for example, LiAO₃. In this case, simply adding Li in an excess amount results in the formation of lithium carbonate on the surface of the active material due to the excess lithium, and the formed lithium carbonate causes resistance and may actually degrade the rate characteristics and the cycle characteristics. For this reason, it is preferable to adjust the amounts of the element A raw material and lithium raw material added such that the compound constituting the coating portion satisfies a predetermined composition, with consideration given to the formation of lithium carbonate.

On the surface of the core particle, the coating portion may be present as particles, may be present as aggregate particles formed through aggregation of particles, or may be present while forming a layer. The wording "be present while forming a layer" means a state in which the material constituting the coating portion is present with a certain thickness. The thickness of the coating portion coating the surface of the core particle may be uniform or nonuniform. It is possible to confirm that the surface of the core particle is coated with the coating portion by, for example, observing the surface of the core particle using an electron microscope. The coverage by the coating portion is not particularly limited as long as the coating portion is present at least on the surface of the core particle. In the present invention, the coverage of the core particle by the coating portion is, for example, preferably 50% or more, more preferably 70% or more, even more preferably 80% or more, yet even more preferably 90% or more, and yet even more preferably 95% or more.

The coating portion may be crystalline or amorphous, but is preferably amorphous. When the coating portion is amorphous, the coating portion is present as a buffer layer between the core particle and the surface portion of the present invention and can reduce the reaction resistance.

Whether the coating portion is crystalline or amorphous can be determined by, for example, checking whether a halo pattern is obtained through selected area electron diffraction. A halo pattern refers to a broad diffraction pattern at lower angles with no distinct diffraction peak.

The coating portion can be formed using the following method, for example. That is, the coating portion can be formed by adding core particles to a mixed solution in which a lithium raw material and an element A raw material are dissolved in a solvent, and then drying and firing the mixture under predetermined conditions. However, this method is merely a preferred example, and the method for forming the coating portion is not limited to this method. For example, it is also possible to form the coating portion using a tumbling fluidized bed coating method, a sol-gel method, a mechanofusion method, a CVD method, a PVD method, and the like, by appropriately adjusting the conditions.

The amount of the coating portion coating the surface of the core particle can be expressed as the proportion of the element A in the composite active material of the present invention. The proportion of the element A in the composite active material is, for example, preferably 0.2 mass% or more, more preferably 0.5 mass% or more, and even more preferably 1.0 mass% or more. On the other hand, the proportion is, for example, preferably 5.0 mass% or less, more preferably 3.0 mass% or less, and even more preferably 2.0 mass% or less. When the amount of the coating portion is within the above-described range, the advantages resulting from the formation of the coating portion are prominent.

### Surface Portion

In the composite active material of the present invention, the surface portion coats the surface of the above-described active material. The surface portion contains a sulfur-containing compound. This sulfur-containing compound contains a crystalline phase having an argyrodite-type crystal structure. The battery including the composite active material of the present invention has a reduced internal resistance and therefore improved battery output performance.

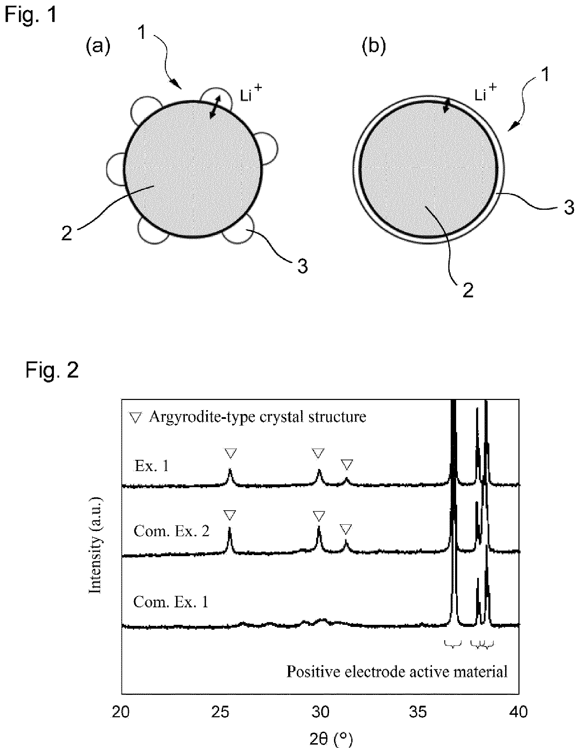

Patent Literature 2 above discloses a technology of coating the surface of an active material with a glass ceramic made of a sulfur-containing compound. In contrast, in the present invention, the sulfur-containing compound contains a crystalline phase having an argyrodite-type crystal structure. Sulfur-containing compounds containing a crystalline phase having an argyrodite-type crystal structure have superior ion conductivity compared with glass ceramics. However, sulfur-containing compounds containing a crystalline phase having an argyrodite-type crystal structure tend to be harder and more resistant to deform compared with glass ceramics. Therefore, it is natural to consider that glass ceramics are suitable for a sulfur-containing compound for use in the surface portion of the composite active material. In addition, in batteries in which a sulfur-containing compound containing a crystalline phase having an argyrodite-type crystal structure is used as a solid electrolyte, there is a tendency that the interfacial contact between the active material and the solid electrolyte is particularly insufficient, and the interfacial resistance is further increased, compared with those in batteries in which a glass ceramic is used as a solid electrolyte. Under these circumstances, the inventors of the present application have found that the use of a sulfur-containing compound containing a crystalline phase having an argyrodite-type crystal structure in the surface portion has an unexpected effect of reducing the internal resistance and improving the battery performance. The reasons why this effect is obtained are as follows. It is conceivable that, as shown in the schematic diagrams of Figs. 1(a) and 1(b), for example, the interfacial contact area between the active material 2 and the surface portion 3 is increased, and the transport of lithium ions is made smoother. It is also conceivable that the high lithium ion conductivity of the sulfur-containing compound contained in the surface portion 3 contributes to an improvement in battery performance. In addition, it is conceivable that the surface portion 3 deforms and suppresses the formation of voids between the particles of the composite active material 1, thereby making the transport of lithium ions between the composite active material 1 and the solid electrolyte (not shown) even smoother.

From the viewpoint of making the above-described advantages more prominent, the coverage of the active material by the surface portion is, for example, preferably 50% or more, more preferably 80% or more, and even more preferably 90% or more. The surface portion may coat the entire surface of the active material. In other words, the coverage of the active material by the surface portion may be 100%. It is preferable that the surface portion coats the active material with this coverage, because this increases the interfacial contact area between the active material and the surface portion and makes the transport of lithium ions even smoother. A method for measuring the coverage of the active material by the surface portion will be described in Examples later.

From the viewpoint of improving the performance of a battery including the composite active material of the present invention even further, the thickness of the surface portion is, for example, more than 0 nm, preferably 50 nm or more, more preferably 70 nm or more, and even more preferably 100 nm or more. As a result of the surface portion coating the active material while having this thickness, the formation of voids between the particles of the composite active material is effectively suppressed, and the lithium ion conductivity of the composite active material is improved even further. On the other hand, the thickness of the surface portion is, for example, preferably 500 nm or less, more preferably 300 nm or less, and even more preferably 200 nm or less. As a result of the surface portion coating the active material while having this thickness, the electron conductivity between the active material can be guaranteed, and therefore the battery performance is improved even further. A method for measuring the thickness of the surface portion will be described in Examples later.

Note that, in the present invention, the wording "the surface portion coating the active material" means that the amount of exposed portions of the surface of core particles is small, and is defined by the above-described coverage.

The surface portion contains a sulfur-containing compound as described above. This sulfur-containing compound contains a crystalline phase having an argyrodite-type crystal structure. An argyrodite-type crystal structure refers to a crystal structure possessed by a group of compounds derived from a mineral represented by the chemical formula Ag₈GeS₆. Whether or not the above-described surface portion has a crystalline phase with an argyrodite-type crystal structure can be determined by performing XRD measurement or the like. For example, in a diffraction pattern measured through XRD using CuKα1 radiation, a crystalline phase with an argyrodite-type crystal structure shows characteristic diffraction peaks at 2θ = 25.5° ± 1.0°, 30.0° ± 1.0°, and 30.9° ± 1.0°. Furthermore, depending on the element species constituting the surface portion, the crystalline phase may also show characteristic diffraction peaks at 2θ = 15.3° ± 1.0°, 18.0° ± 1.0°, 44.3° ± 1.0°, 47.2° ± 1.0°, 51.7° ± 1.0°, 58.3° ± 1.0°, 60.7° ± 1.0°, 61.5° ± 1.0°, 70.4° ± 1.0°, and 72.6° ± 1.0°, in addition to the aforementioned diffraction peaks. To identify diffraction peaks due to an argyrodite-type crystal structure, data of PDF No. 00-034-0688, for example, is used.

From the viewpoint of further improving the performance of a battery including the composite active material of the present invention, it is preferable that the sulfur-containing compound contains a lithium (Li) element, a phosphorus (P) element, a sulfur (S) element, and a halogen (X) element. In this case, in terms of an improvement in lithium ion conductivity between the composite active material, it is preferable that the sulfur-containing compound has a composition formula (I): LiₐPS_{b}X_{c}, where X is at least one of a fluorine (F) element, a chlorine (Cl) element, a bromine (Br) element, and an iodine (I) element.

In the composition formula (I), a, which represents the mole ratio of the Li element, is preferably 3.0 or more and 6.5 or less, more preferably 4.0 or more and 5.9 or less, and even more preferably 5.0 or more and 5.6 or less. When a is within this range, the cubic argyrodite-type crystal structure is stable near room temperature (25°C), sufficient lithium ion vacancies can be introduced into the structure, and thus lithium ion conductivity can be enhanced.

In the composition formula (I), b is preferably 3.5 or more and 5.5 or less, more preferably 4.0 or more and 4.9 or less, and even more preferably 4.2 or more and 4.7 or less, because this stabilizes the argyrodite-type crystal structure near room temperature (25 °C) and enhances the lithium ion conductivity.

In the composition formula (I), c is preferably 0.1 or more and 2.5 or less, more preferably 1.1 or more and 2.0 or less, and even more preferably 1.4 or more and 1.8 or less.

The sulfur-containing compound may also be represented by a composition formula (II): Li_{7-d}PS_{6-d}X_{d}. A composition represented by the composition formula (II) is the stoichiometric composition of an argyrodite-type crystalline phase. In the composition formula (II), X is as defined in the composition formula (I).

In the composition formula (II), d is preferably 0.4 or more and 2.2 or less, more preferably 0.8 or more and 2.0 or less, and even more preferably 1.2 or more and 1.8 or less.

The sulfur-containing compound may also be represented by a composition formula (III): Li_{7-d-2e}PS_{6-d-e}X_{d}. An argyrodite-type crystalline phase having a composition represented by the composition formula (III) is generated by, for example, a reaction between an argyrodite-type crystalline phase having a composition represented by the composition formula (II) and P₂S₅ (phosphorus pentasulfide).

In the composition formula (III), e is a value indicating the deviation of the Li₂S component from the stoichiometric composition represented by the composition formula (II). e is preferably -0.9 or more and (-d+2) or less, more preferably -0.6 or more and (-d+1.6) or less, and even more preferably -0.3 or more and (-d+1.0) or less.

In the composition formula (I), (II), or (III), some of the P sites may be replaced with at least one or two or more elements of Si, Ge, Sn, Pb, B, Al, Ga, As, Sb, and Bi. In this case, the composition formula (I) is Liₐ(P_{1-y}M_{y})S_{b}X_{c}, the composition formula (II) is Li_{7-d}(P_{1-y}M_{y})S_{6-d}X_{d}, and the composition formula (III) is Li_{7-d-2e}(P_{1-y}M_{y})S_{6-d-e}X_{d.} M represents one or two or more elements selected from Si, Ge, Sn, Pb, B, Al, Ga, As, Sb and Bi. y is preferably 0.01 or more and 0.7 or less, more preferably 0.02 or more and 0.4 or less, and even more preferably 0.05 or more and 0.2 or less.

In the sulfur-containing compound, the atomic ratio X/P of the halogen (X) element to the phosphorus (P) element in the sulfur-containing compound is, for example, preferably more than 1.0, more preferably 1.1 or more, even more preferably 1.2 or more, and yet even more preferably 1.4 or more. On the other hand, the atomic ratio X/P is, for example, preferably 2.5 or less, more preferably 2.3 or less, and even more preferably 2.2 or less. When the atomic ratio X/P is within the above-described range, lithium ion conductivity of the composite active material is further improved. For example, the atomic ratio can be measured by high-frequency inductively coupled plasma optical emission spectroscopy (ICP emission spectroscopy) or SEM-EDS analysis.

In particular, when the halogen (X) element includes at least the chlorine (Cl) element and the bromine (Br) element, the atomic ratio (Cl+Br)/P of the total of the chlorine (Cl) element and the bromine (Br) element to the phosphorus (P) element is, for example, preferably more than 1.0, more preferably 1.1 or more, even more preferably 1.2 or more, and yet even more preferably 1.4 or more. On the other hand, the atomic ratio (Cl+Br)/P is, for example, preferably 2.5 or less, more preferably 2.3 or less, and even more preferably 2.0 or less. When the atomic ratio (Cl+Br)/P is within the above-described range, lithium ion conductivity of the composite active material is advantageously improved even further. For example, the atomic ratio can be measured by high-frequency inductively coupled plasma optical emission spectroscopy (ICP emission spectroscopy) or elemental analysis using a scanning electron microscope with EDS (SEM-EDS).

It is particularly preferable that, among the above-described composition formulae (I) to (III), the sulfur-containing compound is represented by a composition formula (IV): Li_{7-d}PS_{6-d}Cl_{d1}Br_{d2}.

In the composition formula (IV), it is preferable that the total mole ratio d (= d1 + d2) of Cl and Br satisfies 1.0 < d ≤ 1.9. When the total mole ratio d (= d1 + d2) of Cl and Br is more than 1.0 and 1.9 or less, lithium ion conductivity can be enhanced even further. In particular, when d is 1.9 or less, the generation of a heterogeneous phase can be controlled, and a reduction in ionic conductivity can be suppressed. In view of this, d in the composition formula (IV) is preferably more than 1.0 and 1.9 or less, more preferably 1.2 or more or 1.8 or less, and even more preferably 1.4 or more or 1.7 or less.

In the composition formula above, the ratio (d2/d1) of the mole ratio of Br to the mole ratio of Cl is, for example, preferably 0.1 or more and 10 or less, more preferably 0.3 or more and 5 or less, and even more preferably 0.5 or more and 3 or less. When d2/d1 is within the above-described range, lithium ion conductivity can be enhanced even further.

In the composition formula above, d1, which indicates the mole ratio of Cl, preferably satisfies, for example, 0.3 or more and 1.5 or less, is more preferably 0.4 or more and 1.2 or less, and is even more preferably 0.6 or more and 1.0 or less. When d1 is not less than the aforementioned lower limit value, lithium ion conductivity can be enhanced even further. On the other hand, when d1 is not more than the aforementioned upper limit value, it is easy to obtain the sulfur-containing compound.

In the composition formula above, d2, which indicates the mole ratio of Br, preferably satisfies, for example, 0.3 or more and 1.5 or less, is more preferably 0.4 or more and 1.2 or less, and is even more preferably 0.6 or more and 1.0 or less. When d2 is not less than the aforementioned lower limit value, it is easy to obtain the sulfur-containing compound. On the other hand, when d2 is not more than the aforementioned upper limit value, lithium ion conductivity can be enhanced even further.

Irrespective of whether the sulfur-containing compound is represented by the composition formula (I), (II), (III), or (IV), when the halogen (X) element includes the bromine (Br) element, lithium ion conductivity between the composite active material is advantageously improved even further.

The proportion of the surface portion in the composite active material of the present invention is not particularly limited as long as the effects of the present invention can be obtained, but is, for example, preferably 0.1 mass% or more, more preferably 1.0 mass% or more, and even more preferably 2.0 mass% or more. When the proportion of the surface portion is within the above-described range, lithium ion conductivity of the composite active material can be effectively enhanced. On the other hand, this proportion is, for example, preferably 30 mass% or less, more preferably 15 mass% or less, and even more preferably 8 mass% or less. When the proportion of the surface portion is within the above-described range, energy density of an all-solid-state battery in which the composite active material of the present invention is used can be increased. The proportion of the surface portion in the composite active material of the present invention can be measured by, for example, high-frequency inductively coupled plasma optical emission spectroscopy (ICP emission spectroscopy).

As the method for forming the surface portion of the composite active material of the present invention, for example, a method in which particles of the active material and particles of a substance constituting the surface portion containing the sulfur-containing compound are dry-mixed or wet-mixed may be used. An argyrodite-type solid electrolyte dissolves in a solvent such as ethanol and may be re-precipitated by desolvation treatment. In that case, there is a problem in that a heterogeneous phase such as a lithium halide is generated, resulting in a reduction in lithium ion conductivity. To address this problem, dry mixing without using a solvent is adopted, and in this manner, generation of a lithium halide or the like in the surface portion can be suppressed during the formation of the surface portion, and as a result, good lithium ion conductivity can be obtained. In addition, as the atomic ratio X/P of the halogen (X) element to the phosphorus (P) element in the sulfur-containing compound becomes larger than 1.0, the above-described effects become more prominent. Therefore, when using a sulfur-containing compound with a large atomic ratio X/P, it is particularly preferable to adopt dry mixing. Dry mixing is preferably performed under a shearing force, a compressive force, and/or an impact force. When such a dry mixing method is adopted, the surface portion can be firmly formed on the surface of the active material. For example, a dry particle composing machine (Nobilta (registered trademark) manufactured by Hosokawa Micron Corporation) can be used for dry mixing.

The amount of lithium halide in the surface portion is, for example, preferably 10 mass% or less, more preferably 5 mass% or less, and even more preferably 1 mass% or less, with respect to the compound exhibiting a crystalline phase having an argyrodite-type crystal structure. When the amount of lithium halide is within the above-described range, good lithium ion conductivity can be obtained. Examples of the lithium halide include LiCl, LiBr, LiCl₁₋ₓBrₓ (0 < x < 1), LiI, LiF, and the like. The presence or absence of a lithium halide can be determined through XRD measurement, for example. For example, the peaks due to the (111) and (200) planes are observed at 30.0±0.5° and 34.8±0.5° for LiCl, 28.0±0.5° and 32.5±0.5° for LiBr, and 29.0±0.5° and 33.8±0.5° for LiCl_{0.5}Br_{0.5}, when CuKα1 radiation is used as the X-ray source.

The amount of lithium halide present can also be determined based on peak intensity ratios obtained through XRD diffraction measurement. For example, in XRD diffraction measurement using CuKα1 radiation as the X-ray source, when the counts at the position of 27.0° is taken as the background counts A, the highest counts at 30.0° ± 1.0° due to the argyrodite-type crystal structure is represented by B, and the highest counts at a peak position due to the (200) plane of the lithium halide is represented by C, the formula (C-A)/(B-A) that represents the abundance ratio of the lithium halide to the argyrodite-type crystal structure is preferably 0.5 or less, more preferably 0.2 or less, and even more preferably 0.1 or less. When the composite active material of the present invention satisfies this range, the lithium ion conductivity of the composite active material is further improved. If (C-A)/(B-A) is 0.1 or less, it can be determined that there is no lithium halide peak.

### Composite Active Material

The particle size of the composite active material of the present invention is, for example, preferably 0.1 µm or more, more preferably 0.5 µm or more, and even more preferably 1.0 µm or greater, in terms of the cumulative volume particle size D₅₀ at 50 vol% cumulative volume as measured using a laser diffraction scattering particle size distribution measurement method. On the other hand, the cumulative volume particle size D₅₀ is, for example, preferably 20 µm or less, more preferably 15 µm or less, and even more preferably 10 µm or less. When the particle size of the composite active material of the present invention is within this range, sufficiently good contact between the particles of the composite active material is achieved, and lithium ion transport between the particles of the composite active material is further improved.

The BET specific surface area of the composite active material of the present invention is, for example, preferably 0.1 m²/g or more, more preferably 0.2 m²/g or more, and even more preferably 0.3 m²/g or more. When the BET specific surface area of the composite active material of the present invention is within this range, contact points between the particles of the composite active material increase, and the lithium ion transport between the particles of the composite active material is further improved. On the other hand, the BET specific surface area is, for example, preferably 10 m²/g or less, more preferably 5.0 m²/g or less, and even more preferably 4.0 m²/g or less. It is preferable that the BET specific surface area of the composite active material of the present invention is within this range, because this makes it easy to uniformly disperse the composite active material during the production of an all-solid-state battery. The BET specific surface area can be set within this range by, for example, controlling the particle size of the active material constituting the composite active material of the present invention, or controlling the coating amount and the coating state of the surface portion coating the active material.

In the present invention, the ratio of the BET specific surface area of the composite active material to the BET specific surface area of the active material is, for example, preferably 0.01 or more, more preferably 0.1 or more, and even more preferably 0.2 or more. On the other hand, the ratio of the BET specific surface area of the composite active material to the BET specific surface area of the active material is, for example, preferably 1.2 or less, more preferably 1.0 or less, and even more preferably 0.8 or less. It is preferable that the ratio of the BET specific surface area of the composite active material to the BET specific surface area of the active material according to the present invention is within this range, because this means that the active material is homogeneously coated with the surface portion, and therefore the interfacial contact area between the composite active material and the solid electrolyte of the surface portion increases, making the transport of lithium ions even smoother.

The specific surface area of the active material can be calculated by, for example, dissolving the argyrodite-type solid electrolyte of the coating portion in ethanol or the like, and measuring the specific surface area of the particles after washing.

The composite active material of the present invention can be formed into an electrode material mixture by mixing the composite active material with a solid electrolyte and a conductive material. This electrode material mixture is useful for forming an electrode (positive or negative electrode) of a battery. The solid electrolyte contained in this electrode material mixture may be the same as or different from the sulfur-containing compound used in the surface portion constituting the composite active material. When the solid electrolyte is a material different from the sulfur-containing compound, the solid electrolyte may or may not contain a crystalline phase having an argyrodite-type crystal structure. As such a solid electrolyte, a material conventionally used in solid-state batteries can be appropriately selected. When the solid electrolyte contains a crystalline phase having an argyrodite-type crystal structure, the description regarding the sulfur-containing compound above appropriately applies to the solid electrolyte, and therefore a description thereof is omitted here. On the other hand, when the solid electrolyte does not contain a crystalline phase having an argyrodite-type crystal structure, the solid electrolyte may be, for example, a sulfur-containing compound made of a glass ceramic, an oxide-based or nitride-based solid electrolyte having lithium ion conductivity, or the like.

As the conductive material, for example, a conductive substance made of a carbon material can be used.

In the present invention, a coating composition can be obtained by mixing the above-described electrode material mixture with a binder and a solvent. This coating composition is useful from the viewpoint of, for example, forming an electrode (positive or negative electrode) by applying this coating composition to the surface of a current collector. An electrode can be formed on the surface of the current collector by, for example, applying the coating composition to the surface of the current collector and drying the resulting coating film to remove the solvent. The thus formed electrode contains the above-described electrode material mixture and the binder. Any binders and solvents that are conventionally used in the art can be used without particular limitation as the binder and the solvent contained in the coating composition.

A battery including the composite active material of the present invention may be a battery with a structure having, for example, a positive electrode layer, a negative electrode layer, and a solid electrolyte layer located between the positive electrode layer and the negative electrode layer, that is to say, a solid-state battery. When the composite active material of the present invention is a positive electrode active material, the positive electrode layer contains the composite active material of the present invention. On the other hand, when the composite active material of the present invention is a negative electrode active material, the negative electrode layer contains the composite active material of the present invention. In either case, the solid electrolyte contained in the solid electrolyte layer of the battery may be the same as or different from the sulfur-containing compound used in the surface portion constituting the composite active material. The solid electrolyte may be the same as that described in the section of the electrode material mixture, and a description thereof is therefore omitted here.

With regard to the embodiments described above, the present invention further discloses the following composite active materials, electrode material mixtures, electrodes, batteries, and coating compositions.
(1) A composite active material comprising
   an active material, and
   a surface portion that is disposed on a surface of the active material and that contains a sulfur-containing compound,
   wherein the sulfur-containing compound contains a crystalline phase having an argyrodite-type crystal structure.
(2) The composite active material as set forth in clause (1), wherein the active material contains a lithium (Li) element and an element M,
   wherein the element M is at least one selected from the group consisting of a nickel (Ni) element, a cobalt (Co) element, a manganese (Mn) element, and an aluminum (Al) element, or
   the element M comprises a combination of
      at least one element selected from the group consisting of a nickel (Ni) element, a cobalt (Co) element, and an aluminum (Al) element, and
      at least one element selected from the group consisting of: transition metal elements that are present between Group 3 elements and Group 11 elements on the periodic table; and typical metal elements in Periods 2 to 4 on the periodic table
(3) The composite active material as set forth in clause (2), wherein the element M includes at least a nickel (Ni) element, a cobalt (Co) element, and a manganese (Mn) element.
(4) The composite active material as set forth in any one of clauses (1) to (3), wherein the active material has a core particle and a coating portion disposed on the surface of the core particle.
(5) The composite active material as set forth in clause (4), wherein the coating portion contains a lithium (Li) element, an element A, where A is at least one of a titanium (Ti) element, a zirconium (Zr) element, a tantalum (Ta) element, a niobium (Nb) element, and an aluminum (Al) element, and an oxygen (O) element.
(6) The composite active material as set forth in any one of clauses (1) to (5), wherein the coverage of the active material by the surface portion is 50% or more and 100% or less.
(7) The composite active material as set forth in any one of clauses (1) to (6), wherein the thickness of the surface portion is more than 0 nm and 500 nm or less.
(8) The composite active material as set forth in any one of clauses (1) to (7), wherein the sulfur-containing compound contains a lithium (Li) element, a phosphorus (P) element, a sulfur (S) element, and a halogen (X) element.
(9) The composite active material as set forth in clause (8), wherein the halogen (X) element includes at least a bromine (Br) element.
(10) The composite active material as set forth in clause (8) or (9), wherein the atomic ratio X/P of the halogen (X) element to the phosphorus (P) element is more than 1.0.
(11) The composite active material as set forth in any one of clauses (8) to (10), wherein the halogen (X) element includes at least a chlorine (Cl) element and a bromine (Br) element, and the atomic ratio (Cl+Br)/P of the total of the chlorine (Cl) element and the bromine (Br) element to the phosphorus (P) element is more than 1.0.
(12) An electrode material mixture including the composite active material as set forth in any one of clauses (1) to (11), a solid electrolyte, and a conductive material.
(13) The electrode material mixture as set forth in clause (12), wherein the solid electrolyte is a material different from the sulfur-containing compound.
(14) A coating composition including the electrode material mixture as set forth in clause (12) or (13), a binder, and a solvent.
(15) An electrode including the electrode material mixture as set forth in clause (12) or (13) and a binder.
(16) A battery including a positive electrode layer, a negative electrode layer, and a solid electrolyte layer located between the positive electrode layer and the negative electrode layer,
   wherein the positive electrode layer contains the composite active material as set forth in any one of clauses (1) to (11).
(17) The battery as set forth in clause (16),
   wherein the solid electrolyte layer contains a solid electrolyte, and
   the sulfur-containing compound and the solid electrolyte are different materials.

### Examples

Hereinafter, the present invention will be described in greater detail using examples. However, the scope of the present invention is not limited to the examples given below. Unless otherwise specified, "%" means "mass%".

### Example 1

### (1) Preparation of Core Particles

A lithium-transition metal complex oxide (hereinafter referred to as "NCM") containing Ni, Co, and Mn at an element ratio of Ni:Co:Mn = 5:2:3 and having a specific surface area of 0.6 m²/g was used as core particles.

### (2) Production of Active Material

A mixed aqueous solution was obtained by dissolving 4.5 g of niobium hydroxide and 10.7 mL of 30% hydrogen peroxide solution in 450 mL of an aqueous lithium hydroxide solution adjusted to a lithium ion concentration of 11.1 g/L. 100 g of the core particles was added to this mixed aqueous solution to prepare a slurry. The slurry was heated to 90°C or higher and kept for 20 minutes. As a result of heating at 90°C or higher, a Li-Nb-O-based compound, which has the property of being easily adsorbed on the surface of core particles, was generated on the surface of the core particles. The resulting liquid was decanted, and then washed three times with 600 mL of a 0.14 mol/L lithium sulfate solution. Then, after drying at 120°C, heat treatment was performed at 200°C for 2 hours in the atmosphere, and a target active material was thus obtained. The cumulative volume particle size D₅₀ of the obtained active material was 4.9 µm. The Nb content in the active material as measured by ICP emission spectroscopy was 1.2 mass%.

### (3) Formation of Surface Portion

A Li₂S powder, a P₂S₅ powder, a LiCl powder, and a LiBr powder were weighed so as to obtain a composition Li_{5.4}PS_{4.4}Cl_{0.8}Br_{0.8}, and the powders were pulverized and mixed in a ball mill for 6 hours to prepare a mixed powder.

The mixed powder was filled into a carbon container, heated in a tubular electric furnace at a temperature increase and decrease rate of 200°C/h while flowing H₂S gas (100% purity) at 1.0 L/min, and fired at 500°C for 4 hours to obtain a fired body. The fired body was pulverized, and then sized through a sieve with an opening size 53 µm to obtain a raw material powder for molding a surface portion. The cumulative volume particle size D₅₀ of the obtained raw material powder was 0.7 µm. The ionic conductivity at room temperature was confirmed to be 4.4 mS/cm. All the operations of weighing, mixing, placement into the electric furnace, removal from the electric furnace, pulverizing, and sizing were performed in a glove box purged with sufficiently dried Ar gas (dew point: -60 °C or lower). The obtained raw material powder was subjected to XRD measurement and confirmed to have an argyrodite-type crystal structure.

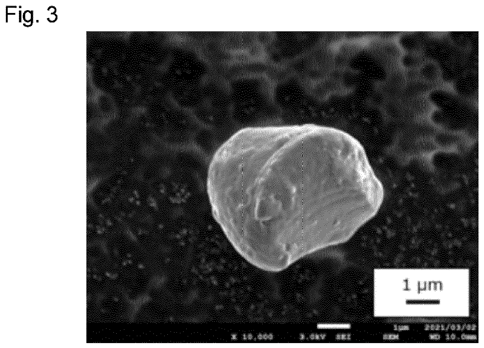

4.8 g of the thus obtained raw material powder for a surface portion and 40 g of the active material particles obtained in the preceding section (2) were mixed using a dry particle composing machine NOB-MINI manufactured by Hosokawa Micron Corporation, to cause the raw material powder to firmly adhere to the surface of the active material particles. Mixing was performed under the conditions of a rotor rotation speed of 4000 rpm, a processing time of 12.5 min, a rotor clearance of 2 mm, a shaft cooling air flow rate of 5 L/min, and a dew point of -50°C, in a dry air atmosphere. Particles of a composite active material were obtained in this manner. X-ray diffraction measurement of the obtained composite active material confirmed the presence of an argyrodite-type crystal structure as shown in Fig. 2. No peak from a lithium halide was observed. In addition, the obtained composite active material was subjected to elemental analysis by SEM-EDS and confirmed to have a (Cl+Br)/P atomic ratio of more than 1.0. Fig. 3 shows a scanning electron microscope image of the composite active material.

### Example 2

The feed amount of the raw material powder of the surface portion relative to the particles of the active material in Example 1 was changed as shown in Table 1 below. Otherwise, a similar procedure to that of Example 1 was performed, and particles of a composite active material were thus obtained. X-ray diffraction measurement of the obtained composite active material confirmed the presence of an argyrodite-type crystal structure. No peak from a lithium halide was observed. In addition, the obtained composite active material was subjected to elemental analysis by SEM-EDS and confirmed to have a (Cl+Br)/P atomic ratio of more than 1.0.

### Example 3

During the formation of the surface portion in Example 1, the raw material powder was adjusted so that the composition of the surface portion was Li_{5.8}PS_{4.8}Cl_{1.2}. Otherwise, a similar procedure to that of Example 1 was performed, and particles of a composite active material were thus obtained.

### Comparative Example 1

### Formation of Surface Portion

1.91 g of Li₂S and 3.09 g of P₂S₅ were weighed into a zirconia pot having an internal volume of 80 ml. Heptane and 90 g of 10 mm zirconia balls were added, and mechanochemical treatment was performed in a planetary ball mill P-5 (manufactured by Fritsch) at 370 rpm for 50 hours. The solvent was removed through vacuum drying at room temperature, and the particles were sized through a 250-µm sieve to obtain a raw material powder for a surface portion. The ionic conductivity of this raw material powder at room temperature was confirmed to be 0.5 mS/cm.

Otherwise, a similar procedure to that of Example 1 was performed, and particles of a composite active material were thus obtained. X-ray diffraction measurement of the obtained composite active material was performed, and no argyrodite-type crystal structure was confirmed. Elemental analysis by SEM-EDS confirmed that the (Cl+Br)/P atomic ratio was less than 1.0.

### Comparative Example 2

During the formation of the surface portion in Example 1, the raw material powder of the surface portion and the particles of the active material were mixed using a mortar. Otherwise, a similar procedure to that of Example 1 was performed, and particles of a composite active material were thus obtained.

### Evaluation

For each of the composite active materials obtained in the examples and the comparative examples, the particle size D₅₀ and the BET specific surface area were measured. The BET specific surface area of the active material obtained by removing the surface portion from the composite active material using the method described above was also measured.

In addition, the coverage and the thickness of the surface portion were measured using a method described below. Furthermore, the discharge capacity retention rate and the reaction resistance in a solid-state battery including the composite active material were measured using a method described below. Table 1 shows the results.

### Coverage and Thickness of Surface Portion

With use of an XPS apparatus, VersaProbe III, manufactured by ULVAC-PHI, Inc., depth profiling of the composite active material was performed in an inward direction from the particle surface. The conditions and the like used for the measurement were as follows.
Excitation X-ray: AlKα radiation (1486.6 eV)
Tube voltage: 15 kV
Tube current: 3.3 mA
X-ray irradiation area: 200 µmϕ
X-ray scanning area: 1000 µm × 300 µm
Pass energy: 112.0 eV
Energy step: 0.1 eV
Detection angle: 45°
Measurement temperature: -80°C or lower
Measured elements: Li1s, P2p, S2p, Cl2p, Br3d, Mn2p1/2, Co2p1/2, Ni2p1/2, Nb3 d
Ion gun condition: 4 kV
Ion beam raster range: 2 mm × 2 mm
Sputtering rate: 8.5 nm/min (in terms of SiO₂)

The maximum measurement depth was set to be greater than or equal to the depth at which a reduced saturation region (plateau region) was reached in an S2p semi-quantitative profile measured in the inward direction from the surface. Specifically, the depth at which the slope of a line obtained by linear approximation with respect to two or more consecutive measurement points in a range of 100 nm or deeper in the S2p semi-quantitative profile first became -0.002 or more from the surface toward the inside was used as the depth at which the reduced saturation region was reached.

For sample preparation and conveyance to the apparatus, a powder sample was pelletized using a press in an Ar atmosphere with a dew point of -60°C or lower, then fixed to a sample stand dedicated to XPS using a metal jig, and conveyed to the XPS apparatus using a non-atmospheric-exposure vessel manufactured by ULVAC-PHI, Inc.

The XPS data was analyzed using data analysis software ("MultiPak Ver 9.9" manufactured by ULVAC-PHI, Inc.), and semi-quantitative values in the depth direction was calculated for each element. Shirley was used for background mode. For example, charge correction was performed at the Nb3d5/2 peak (206.7 eV).

Since the Br3d peak interferes with the Ni3p peak, the Br semi-quantitative values were calculated using the peak area from which the interference component of Ni3p was removed by waveform separation analysis. Specific waveform separation parameters vary depending on a coating compound and a core compound, and therefore, it is desirable to measure the Br3d and Ni3p spectra for each of the coating compound and the uncoated core compound, and determine and use peak parameters that reproduce each spectrum.

### Coverage of Surface Portion

With respect to the semi-quantitative values of the elements in the depth direction calculated by XPS, a semi-quantitative ratio (P+S+Cl+Br)/(P+S+Cl+Br+Nb+Ni+Co+Mn) was calculated from the semi-quantitative values of the respective elements at the outermost surface (sputtering depth: 0 nm) and used as the coverage.

(P+S+Cl+Br) were the elements contained in the raw material powder used for the surface portion. (P+S+Cl+Br+Nb+Ni+Co+Mn) were the elements including the elements contained in the raw material powder used for the surface portion, the elements contained in the coating portion, and the elements contained in the core particles other than oxygen. Note that the coverage can be calculated using the above-described method, regardless of the types of the elements contained in the surface portion, the coating portion, and the core particles.

### Thickness

With respect to the S2p semi-quantitative profile in the depth direction calculated by XPS, the value of the depth at which an intermediate value between the maximum value and the minimum value was obtained was calculated as the thickness of the coating layer. When the depth at which the intermediate value between the maximum value and the minimum value of the S2p half quantitative values did not coincide with the depth of any measurement point, the value of the depth corresponding to the intermediate value was calculated with the two measurement points located before and after the intermediate value using a linear approximation formula.

### Discharge Capacity Retention Rate

Solid-state batteries were produced by performing the following procedure using the composite active materials obtained in the examples and the comparative examples. With respect to Examples 1 and 3 and Comparative Examples 1 and 2, the obtained composite active material was mixed with a conductive material (VGCF) in a mortar to obtain a positive electrode material mixture so that the mass ratio between the active material, the solid electrolyte, and the conductive material was 85.4:10.3:4.3. No solid electrolyte was added except for the solid electrolyte contained in the composite active material.

With respect to Example 2, the obtained composite active material was mixed with the solid electrolyte prepared for the formation of the coating portion and the conductive material (VGCF) in a mortar to obtain a positive electrode material mixture so that the active material:the solid electrolyte The conductive material = 85.4:10.3:4.3.

A negative electrode material mixture was obtained by mixing a graphite powder and the solid electrolyte prepared for the formation of the coating portion in a mortar at a mass ratio of 50:50.

0.05 g of solid electrolyte was poured into a ceramic cylinder with openings at the upper and lower ends, the ceramic cylinder having an opening diameter of 10.5 mm and a height of 18 mm, in a state in which the lower opening was closed with an electrode made of SUS. An electrode was attached to the upper opening, and uniaxial pressing was performed at about 0.8 tf/cm² to form a solid electrolyte layer. The upper electrode was temporarily removed, the positive electrode material mixture was poured onto the solid electrolyte layer, the positive electrode material mixture was smoothed flat, and then the upper electrode was attached again. Subsequently, the lower electrode was temporarily removed, and the negative electrode material mixture was poured onto the solid electrolyte layer. The lower electrode was attached again, and uniaxial pressing was performed at about 4.6 tf/cm². After that, the resulting stack was clamped from both the upper electrode side and the lower electrode side, and bound together under a torque pressure of 4 N•m. Thus, an all-solid-state battery having a capacity equivalent to 1.5 mAh was produced. The production steps of the all-solid-state battery were performed in a glove box purged with dry air with an average dew point of -70°C.

The thus obtained battery was placed in an environmental testing machine kept at 25°C, connected to a charge/discharge measuring apparatus, and evaluated. Charging was performed using a CC-CV method with an upper limit voltage set to 4.4 V, and discharging was performed using a CC method with a lower limit voltage set to 3.0 V.

From the first cycle to the third cycle, charging and discharging was repeated at a current density of 0.1 C, and in the fourth and subsequent cycles, charging was performed at a current density of 0.1 C and discharging was performed at current densities of 1.0 C, 2 C, 3 C, 5 C, and 8 C.

The discharge capacity retention rate was calculated by dividing the discharge capacity when discharging was performed at a current density of 8 C by the discharge capacity at 0.1 C in the third cycle.

### Reaction Resistance

In the measurement of the discharge capacity retention rate, upon completion of discharging in the third cycle, CC charging was performed at 0.1 C to a charge capacity of 0.75 mAh. The charged battery was subjected to impedance measurement using SOLARTRON 1255B SOLARTRON 1255B FREQUENCY RESPONSE ANALYZER available from TOYO Corporation. As the measurement conditions, the AC amplitude was set to 10 mV, and the frequency range was set to 1.0×10⁻⁶ to 1.0×10⁻¹ Hz. The reaction resistance (Ω) was calculated from the intersection with the horizontal axis in a Cole-Cole plot that was a complex impedance plane plot obtained through the measurement.

### Confirmation of Crystalline Phase

The crystalline phase was confirmed through X-ray diffraction measurement. The measurement was performed using an X-ray diffractometer "Smart Lab SE" manufactured by Rigaku Corporation. The measurement conditions were as follows: non-atmospheric-exposure; scan axis: 2θ/θ; scan range: from 20° to 40°; step width: 0.01°; and scan speed: 0.1°/min. CuKα1 radiation was used as the X-ray source. The tube voltage was set to 40 kV, and the tube current was set to 80 mA.

Note that the results of the X-ray diffraction measurement with respect to Example 1 and Comparative Example 2 shown in Fig. 2 are the results obtained by offsetting 30000 counts and 15000 counts, respectively, from the obtained counts.

**Table 1**

| | | Example 1 | Example 2 | Example 3 | Comparative Example 1 | Comparative Example 2 |
|---|---|---|---|---|---|---|
| Active material | Core particle | NCM | NCM | NCM | NCM | NCM |
| | Coating portion | LiNbO | LiNbO | LiNbO | LiNbO | LiNbO |
| | BET specific surface area [m²/g] | 1.5 | | | | |
| Feed amount of surface portion (%, relative to active material) | | 10.7 | 4.0 | 10.7 | 10.7 | 10.7 |
| Surface portion | Crystalline phase of surface portion | Argyrodite | Argyrodite | Argyrodite | Li₂S-P₂S₅ glass | Argyrodite |
| | Composition of surface portion | Li_{5.4}PS_{4.4}Cl_{0.8}Br_{0.8} | Li_{5.4}PS_{4.4}Cl_{0.8}Br_{0.8} | Li_{5.8}PS_{4.8}Cl_{1.2} | 75Li₂S·25P₂S₅ | Li_{5.4}PS_{4.4}Cl_{0.8}Br_{0.8} |
| | Coating method | Dry coating | Dry coating | Dry coating | Dry coating | Mixing in mortar |
| | Coverage [%] | 96 | 90 | 91 | 89 | 73 |
| | Thickness [nm] | 185 | 139 | 204 | 66 | 323 |
| Composite active material | D₅₀ [µm] | 5.2 | 5.2 | 5 | 6.1 | 5.2 |
| | BET specific surface area [m²/g] | - | 0.79 | - | 0.74 | 2.08 |
| | Specific surface area ratio of composite active material to active material | - | 0.53 | - | 0.49 | 1.39 |
| | Reaction resistance [Ω] | 89 | 62 | 83 | 601 | 116 |
| | Discharge capacity retention rate [%] | 6 | 15 | 3 | 0 | 1 |

As is clear from the results shown in Table 1, it is found that the solid-state batteries including the composite active materials obtained in the examples have a lower reaction resistance and a higher discharge capacity retention rate than the solid-state batteries of the comparative examples.

### Industrial Applicability

As has been described in detail above, according to the present invention, a composite active material with which good battery performance can be obtained is provided.

## Claims

1. A composite active material comprising
an active material, and
a surface portion that is disposed on a surface of the active material and that contains a sulfur-containing compound,
wherein the sulfur-containing compound contains a crystalline phase having an argyrodite-type crystal structure.

2. The composite active material according to claim 1, wherein the active material contains a lithium (Li) element and an element M,
wherein the element M is at least one selected from the group consisting of a nickel (Ni) element, a cobalt (Co) element, a manganese (Mn) element, and an aluminum (Al) element, or
the element M comprises a combination of
at least one element selected from the group consisting of a nickel (Ni) element, a cobalt (Co) element, and an aluminum (Al) element, and
at least one element selected from the group consisting of: transition metal elements that are present between Group 3 elements and Group 11 elements on the periodic table; and typical metal elements in Periods 2 to 4 on the periodic table.

3. The composite active material according to claim 2, wherein the element M includes at least a nickel (Ni) element, a cobalt (Co) element, and a manganese (Mn) element.

4. The composite active material according to claim 1, wherein the active material has a core particle and a coating portion disposed on a surface of the core particle.

5. The composite active material according to claim 4, wherein the coating portion contains a lithium (Li) element, an element A, where A is at least one of a titanium (Ti) element, a zirconium (Zr) element, a tantalum (Ta) element, a niobium (Nb) element, and an aluminum (Al) element, and an oxygen (O) element.

6. The composite active material according to claim 1, wherein a coverage of the active material by the surface portion is 50% or more and 100% or less.

7. The composite active material according to claim 1, wherein a thickness of the surface portion is more than 0 nm and 500 nm or less.

8. The composite active material according to claim 1, wherein the sulfur-containing compound contains a lithium (Li) element, a phosphorus (P) element, a sulfur (S) element, and a halogen (X) element.

9. The composite active material according to claim 8, wherein the halogen (X) element includes at least a bromine (Br) element.

10. The composite active material according to claim 8, wherein an atomic ratio X/P of the halogen (X) element to the phosphorus (P) element is more than 1.0.

11. The composite active material according to claim 8, wherein the halogen (X) element includes at least a chlorine (Cl) element and a bromine (Br) element, and an atomic ratio (Cl+Br)/P of the total of the chlorine (Cl) element and the bromine (Br) element to the phosphorus (P) element is more than 1.0.

12. An electrode material mixture comprising the composite active material according to any one of claims 1 to 11, a solid electrolyte, and a conductive material.

13. The electrode material mixture according to claim 12, wherein the solid electrolyte is a material different from the sulfur-containing compound.

14. A coating composition comprising the electrode material mixture according to claim 12, a binder, and a solvent.

15. An electrode comprising the electrode material mixture according to claim 12 and a binder.

16. A battery comprising a positive electrode layer, a negative electrode layer, and a solid electrolyte layer located between the positive electrode layer and the negative electrode layer,
wherein the positive electrode layer contains the composite active material according to any one of claims 1 to 11.

17. The battery according to claim 16,
wherein the solid electrolyte layer contains a solid electrolyte, and
the sulfur-containing compound and the solid electrolyte are different materials.
